# FASCICULE DE BREVET EUROPEEN

(11) **EP 1 209 014 B1**
(45) Date de publication et mention de la délivrance du brevet: **15.11.2006**
(21) Numéro de dépôt: 01460070.4
(22) Date de dépôt: 19.11.2001
(51) Int. Cl.: B60J 1/20

(54) **Store à enrouleur à support d'enroulement tronconique à degrés**
Fensterrollo mit progressiv konischer Wickelwelle
Roller blind with a progressively conical roller support

(30) Priorité: 22.11.2000 FR 0015111
(43) Date de publication de la demande: 29.05.2002
(73) Titulaire: WAGON SAS, 79300 Bressuire (FR)
(72) Inventeur: Jolivet, David, 79300 Bressuire (FR)
(74) Mandataire: Vidon, Patrice

(56) Documents cités:
- DE-A- 2 841 218
- DE-C- 644 744
- FR-A- 2 750 158
- FR-A- 2 779 475

## Description

Le domaine de l'invention est celui des stores à enrouleur, notamment pour véhicules automobiles. Plus précisément, l'invention concerne les stores destinés à être déployés en regard de vitres non rectangulaires, nécessitant que le bord libre de la toile déployée ne soit pas parallèle aux moyens, ou support, d'enroulement.

De façon courante, les vitres latérales ou les pare-brise arrières de véhicules sont équipés de store d'occultation. Ceux-ci comprennent généralement un boîtier intégrant un tube d'enroulement, le rideau du store étant fixé au tube d'enroulement d'une part, et à une barre de tirage d'autre part. La barre de tirage est déplacée, manuellement ou de façon motorisée, entre deux positions extrêmes, une position déployée, ou d'occultation, et une position repliée, ou enroulée. La plupart du temps le tube est cylindrique, et la barre de tirage reste parallèle à ce tube d'enroulement.

Cependant, du fait notamment de l'évolution des formes des véhicules automobiles, de nombreuses vitres latérales actuelles ne sont plus rectangulaires. En particulier, il est courant que la partie supérieure de la vitre arrière soit inclinée vers l'arrière du véhicule.

Pour que la barre de tirage puisse prendre une position inclinée par rapport au tube d'enroulement lorsque l'écran souple du store est déployé, on a pensé à monter une toile ayant une forme sensiblement trapézoïdale sur un tube d'enroulement conique de façon à proposer un enroulement de l'écran souple adapté à sa forme. Une telle approche est par exemple décrite dans le document de brevet FR-A-2 750 158 au nom du titulaire de la présente demande de brevet, document qui divulgue les caractéristiques des préambules des revendications 1 et 8.

Cette technique permet certes d'atteindre le résultat voulu, mais présente toutefois de nombreux inconvénients liés à la fabrication du tube d'enroulement conique, et au montage correspondant du store.

En effet, la fabrication des cônes ou d'éléments tronconiques est clairement plus coûteuse que celle de tubes cylindriques que l'on obtient aisément, par exemple par extrusion. Il se pose non seulement des problèmes de complexité de fabrication, mais également de temps de fabrication.

De plus, il s'avère nécessaire de fabriquer des cônes différents en fonction de la forme et des dimensions de l'écran souple pour éviter que celui-ci ne plisse lors de son enroulement. Le fabricant doit donc gérer un nombre plus important de références produits.

Une autre approche consiste à rapporter, par collage, un élément de feutrine à une extrémité d'un tube cylindrique, pour créer un décalage de diamètre entre les deux extrémités. Mais il s'agit d'une technique quasi-artisanale, qui nécessite une main d'oeuvre importante (découpage de la feutrine, mise en place, collage,...). Clairement, cela n'est pas adapté à une production de masse, de par exemple 1000 unités par jour.

En outre, la solidarisation de la toile à la feutrine n'est pas aisée.

L'invention a notamment pour objectif de pallier ces inconvénients de l'état de la technique.

Plus précisément, un objectif de l'invention est de proposer des moyens d'enroulement permettant le déploiement d'une toile de store avec une barre de tirage s'inclinant par rapport à l'axe d'enroulement qui soient plus simples et plus efficaces, et/ou plus économiques que ceux des techniques antérieures.

L'invention a aussi pour objectif de fournir de tels moyens d'enroulement qui puisse être adaptés aisément et à moindre coût en fonction de la forme et des dimensions de la vitre à occulter.

L'invention a également pour objectif de proposer un procédé pour la fabrication de tels moyens d'enroulement, qui soient plus rapides, moins coûteux et aisément automatisables (au moins en partie).

Ces objectifs ainsi que d'autres qui apparaîtront par la suite, sont atteints à l'aide d'un store à enrouleur comportant un écran souple ayant un bord libre relié à une barre de tirage et un bord opposé solidarisé à un support d'enroulement, la surface dudit écran souple étant telle que la barre de tirage prend une position non parallèle audit support d'enroulement en position déployée.
Selon l'invention, ledit support d'enroulement comprend au moins deux supports coaxiaux de diamètres différents, lesdits au moins deux supports coaxiaux de diamètre différents comportant deux tubes voisins emmanchés l'un sur l'autre, montés de façon que ledit support d'enroulement présente une forme tronconique à degrés,
le premier desdits tubes voisins présentant un diamètre extérieur très légèrement supérieur au diamètre intérieur du second desdits tubes voisins, de telle sorte que lesdits deux tubes voisins sont solidaires en rotation une fois assemblés.

On évite ainsi les contraintes de fabrication d'un tube conique tout en permettant, comme on va le voir par la suite, un enroulement au moins partiellement conique de l'écran souple. L'expression "tronconique à degrés" signifie que le support est formé de portions cylindriques de diamètres décroissants (par assimilation à l'expression "pyramide à degrés"). Cette technique est en outre beaucoup plus simple à mettre en oeuvre que la mise en place d'une pièce de feutrine.

Des tubes de tout diamètre étant disponibles ou aisément réalisables, on peut adapter autant que de besoin et sans élévation sensible de coût, les diamètres des tubes en fonction des dimensions et/ou de la forme de l'écran souple.

L'assemblage des tubes pour former les moyens d'enroulement est également une opération aisée, en particulier en utilisant la technique avantageuse décrite ci-après.

En effet, de façon préférentielle, ledit deuxième tube présente une fente longitudinale dont les bords peuvent être écartés lors de l'emmanchement sur ledit premier tube.

On comprend que l'assemblage s'effectue très simplement, sans qu'il soit nécessaire de forcer (malgré le choix particulier de diamètres exposé plus haut). Il suffit ensuite de relâcher l'écartement imprimé à la fente pour que le deuxième tube soit directement solidarisé au premier.

Selon un mode de réalisation avantageux, ledit écran souple est solidarisé audit deuxième tube en des points de fixation s'étendant sur ladite fente et/ou au voisinage de ladite fente.

Préférentiellement, la solidarisation dudit écran souple a également une fonction de fermeture de ladite fente.

Ainsi, en une seule opération, on referme la fente, on fixe l'écran et, si nécessaire, on renforce la solidarisation des tubes. En outre, on dissimule la fente, qui ne vient donc pas en contact avec la toile de l'écran repliée. On évite ainsi d'éventuels problèmes d'usure et de détérioration, dus aux frottements le long de cette fente.

De façon avantageuse, ledit deuxième tube présente des stries longitudinales sur sa paroi interne.

De telles stries présentent un double avantage : elles facilitent l'emmanchement du premier tube en limitant les zones de contact et de frottement, et elles renforcent la liaison fixe à rotation des deux tubes.

Selon un mode de réalisation particulier, on prévoit que le tube de plus faible diamètre extérieur s'étend sensiblement sur toute la longueur dudit moyen d'enroulement.

Le nombre de tubes coaxiaux est quelconque, et adapté à la longueur de l'ensemble et à la précision souhaitée. Dans de nombreux cas, et notamment pour les vitres latérales de véhicules, ledit moyen d'enroulement comprend uniquement deux tubes coaxiaux.

L'invention concerne également un procédé avantageux de fabrication et de montage d'un store tel que décrit ci-dessus. Ce procédé comprend avantageusement les étapes suivantes :
(i) réaliser un premier et un deuxième tubes, le diamètre intérieur dudit deuxième tube étant légèrement inférieur au diamètre extérieur dudit premier tube ;
(ii) préférentiellement, réaliser une fente sur la longueur dudit deuxième tube ;
(iii) emmancher ledit premier tube dans ledit deuxième tube (les bords de ladite fente étant écartés lors de la mise en place) ;
(iv) solidariser ledit écran souple sur ledit deuxième tube, et sur ledit premier tube.

Préférentiellement, ce procédé comprend également une étape supplémentaire consistant à solidariser ledit écran souple sur ladite fente et/ou au voisinage de ladite fente dudit deuxième tube, de façon à, simultanément, fermer ladite fente.

Selon un mode avantageux de mise en oeuvre, on prévoit que ledit deuxième tube est maintenu dans une position angulaire contrôlée par rapport audit écran souple pendant et après la réalisation de ladite fente, ainsi qu'après l'emmanchement dudit premier tube, pour pouvoir présenter l'extrémité dudit écran souple en regard de ladite fente.

En procédant de cette façon, la position de la fente du deuxième tube est fixe, ou au moins connue, pour la mise en place et la solidarisation de l'extrémité de l'écran souple sur le tube d'enroulement.

Cette caractéristique s'avère donc particulièrement intéressante pour une fabrication à grande échelle que l'on souhaite automatiser en tout ou partie.

Avantageusement, au moins ledit deuxième tube est obtenu par extrusion.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins parmi lesquels :
- la figure 1 présente un support d'enroulement constitué de deux portions cylindriques de diamètres différents selon l'invention ;
- la figure 2 présente, en perspective, la portion cylindrique de plus grand diamètre du support de la figure 1, fendu selon l'invention ;
- la figure 3 présente le support d'enroulement des figures 1 et 2, sur lequel une toile est solidarisée selon l'invention ;
- la figure 4 est une vue en coupe de la figure 3, selon l'axe du support d'enroulement ;
- la figure 5 est organigramme simplifié illustrant le procédé de fabrication du store de la figure 3.

Le principe de l'invention repose donc sur une approche nouvelle des supports d'enroulement comprenant au moins un épaulement de façon à présenter au moins deux sections cylindriques de diamètres différents. Grâce à un tel support d'enroulement, l'écran souple peut être déployé entre une position de départ dans laquelle la barre de tirage est sensiblement parallèle au tube d'enroulement et une position d'arrivée dans laquelle la barre de tirage est inclinée par rapport au tube d'enroulement, sans engendrer les contraintes de fabrication d'un tube conique, ni de collage d'une pièce de feutrine.

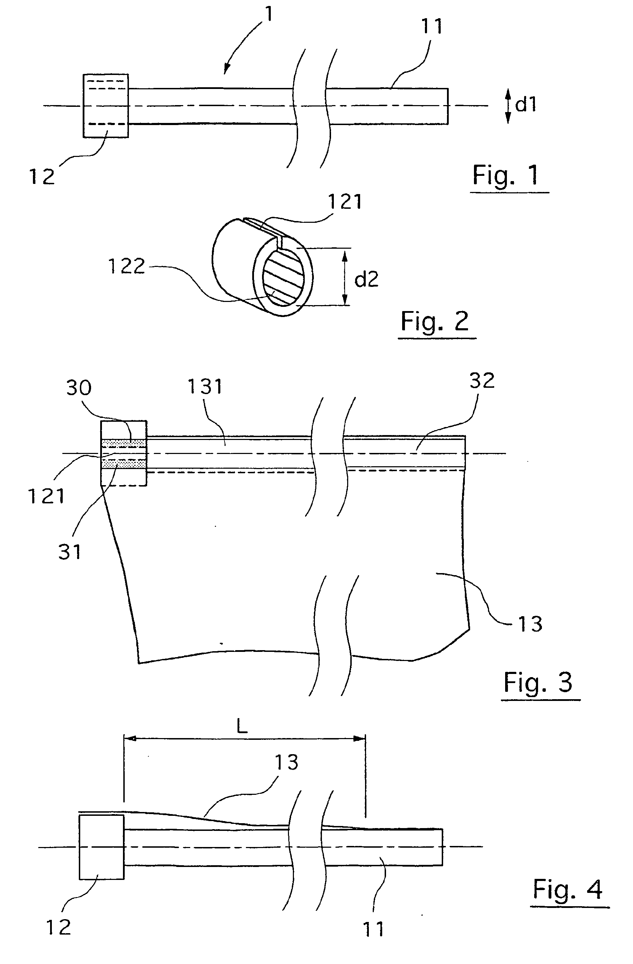

Sur la figure 1, on a illustré le principe général, connu en soi, d'un mode de réalisation de l'invention. Le support d'enroulement 1 comprend ici deux tubes 11 et 12. Il s'agit, bien entendu, d'un mode de réalisation simplifiée, qui s'avère cependant suffisant dans bien des cas. Bien sûr, si nécessaire (du fait de la longueur du support et/ou d'une exigence d'une progressivité de la "conicité"), il est possible de prévoir plus de deux tubes.

On notera que sur les figures, les échelles ne sont pas respectées, certaines dimensions étant volontairement exagérées pour mieux illustrer l'invention.

Le tube 11 présente une longueur au moins égale à la longueur de l'extrémité de l'écran souple devant être solidarisée sur le tube d'enroulement 1.

Selon l'invention, le tube 11 est emmanché dans le tube 12. Pour supprimer le degré de liberté en rotation entre les deux tubes après emmanchement, on réalise un tube 12 présentant un diamètre intérieur d₂ légèrement inférieur au diamètre externe d₁ du tube 11. Bien entendu, dans ce cas, l'assemblage est peu aisé.

Ainsi que cela est illustré en figure 2, on prévoit donc avantageusement une fente 121 ménagée dans le tube 12. Ainsi, en montage, les bords de la fente 121 peuvent être écartés de façon élastique, sous la poussée du tube 11, et/ou d'un outillage prévu à cet effet.

Préférentiellement, la fente est ensuite refermée, par exemple par soudage.

Le tube 12 peut présenter, en outre, des stries 122 contribuant à :
- faciliter l'emmanchement du tube 11 ;
- renforcer à la liaison fixe à rotation entre les deux tubes.

Il convient ensuite de solidariser par une extrémité 131 (figure 3) la toile (l'écran souple 13) au support d'enroulement. Avantageusement, cette opération se fait par soudage, et coïncide avec l'opération de fermeture de la fente 121. L'écran souple 13 est donc solidarisé au tube 12 au voisinage 30, 31 de la fente 121, ou directement au niveau de cette fente (dans laquelle il peut avoir été préalablement pincé).

L'opération de soudure peut également servir à renforcer la liaison rigide entre les tubes 11 et 12.

A l'extrémité du support d'enroulement 1 opposée au tube 12, le bord 131 de l'écran souple est solidarisé, par exemple par soudure, au tube 11. La zone 32 de soudure s'étendra plus ou moins sur la longueur du tube 11.

Ainsi, dans l'exemple illustré en figure 3, l'écran souple est soudé sur le tube 11 et sur le tube 12 tout en ménageant un intervalle de longueur L le long duquel l'écran souple est libre de toute fixation au support d'enroulement 1. Cela est nécessaire pour éviter les plis de la toile, et simuler l'effet conique, bien que celui-ci ne soit en fait réalisé que par degrés.

Cette longueur L, et par conséquent la longueur sur laquelle s'étend la soudure 32, dépend notamment de la différence entre les diamètres d₁ et d₂, et donc de l'inclinaison souhaitée pour la barre de tirage.

En effet, en laissant l'extrémité 131 libre entre deux zones de fixation, le bord de l'écran souple se confond sensiblement, sur la longueur L, avec la génératrice d'un cône tronqué défini par l'écran souple enroulé, dont le diamètre le plus grand est celui du tube 12 et le diamètre le plus petit est celui du tube 11.

Aussi en fonction de la longueur L et de la différence entre les diamètres d₁ et d₂, on obtiendra un enroulement conique plus ou moins évasé.

L'écran présente une forme sensiblement trapézoïdale, lorsqu'il est déployé. Les bords latéraux de l'écran souple reliant ces deux extrémités peuvent par exemple être linéaires ou curvilignes. Il en est de même pour la barre de tirage.

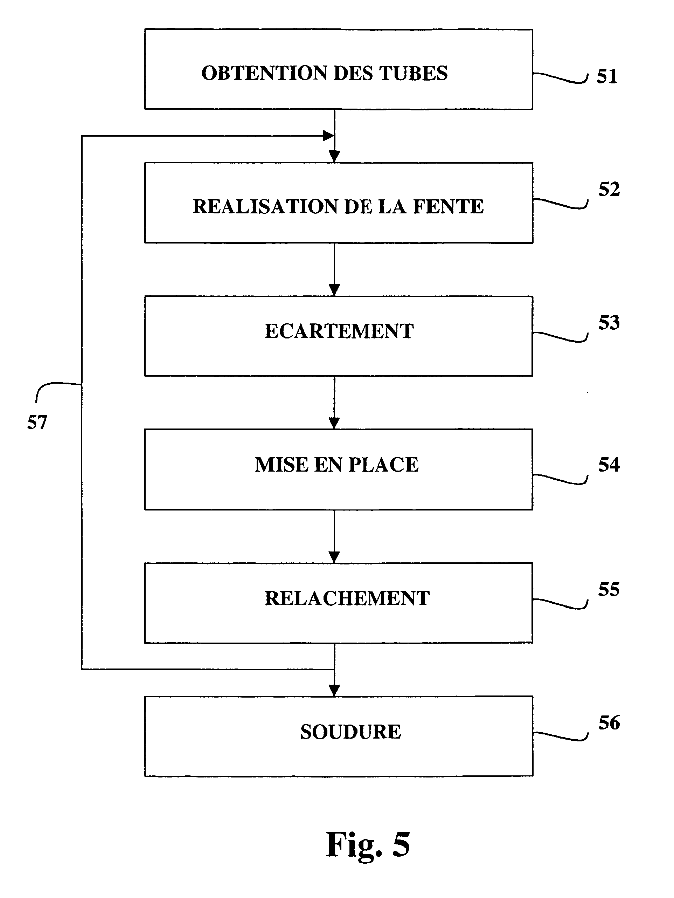

Comme déjà précisé, l'invention concerne également le procédé de fabrication et de montage du store qui vient d'être décrit, celui-ci va maintenant être détaillé, à l'aide de la figure 5.

On obtient tout d'abord (étape 51) les deux tubes 11, 12.

Les tubes 11 et 12 sont réalisés en matière plastique, matériau composite ou autre, par extrusion. Les filières d'extrusion sont conçues de telle sorte que le diamètre interne du tube 12 soit légèrement inférieur au diamètre externe du tube 11. La différence entre ces deux diamètres est de l'ordre de quelques dixièmes de millimètres par exemple.

Les tubes, et notamment le tube de base 11, ou tube de plus petit diamètre, peuvent également être réalisés de tout autre manière. Par exemple, il peut s'agir d'un tube en aluminium.

Une fente est réalisée (52) par usinage sur le tube 12. Il est aussi envisageable que le tube 12 soit réalisé par moulage en faisant alors directement apparaître la fente 121. La fente peut être réalisée à l'avance, ou juste au moment de l'assemblage. Dans ce dernier cas, il est plus aisé de maîtriser l'orientation de la fente.

Les bords de la fente 121 sont écartés (53), puis ce tube 11 est emmanché (54) dans le tube 12. Cette opération étant rendue aisée du fait de l'écartement des bords de la fente 121. L'écartement est alors relâché (55). Le tube 12 est alors, automatiquement, efficacement solidarisé au tube 11.

De préférence, les tubes 11 et 12 sont donc présentés sur un banc d'assemblage, intégrant des moyens pour la réalisation de la fente 121. On peut ainsi, dans le cadre d'un procédé industriel comprenant des étapes automatisées, maintenir le tube 12 dans une position fixe, ou à tout le moins repérée, pendant et après l'emmanchement du tube 11.

On connaît alors la position de la fente 121, qui détermine la position selon laquelle l'extrémité de l'écran souple doit être amenée pour être solidarisée (56) sur le tube d'enroulement.

Il est, bien entendu, que ces étapes peuvent être réalisées manuellement par un opérateur qui procède alors à un contrôle visuel de la position de la fente pour présenter convenablement l'écran souple en vue de sa solidarisation sur le tube.

Le procédé peut comprendre une étape supplémentaire consistant à rapprocher les bords de la fente 121, préalablement à la solidarisation de l'écran souple 13 sur le tube 12.

L'écran souple est ensuite solidarisé (56) sur la fente 121 ainsi que sur la partie du tube 11 s'étendant à partir de son extrémité opposé au tube 12.

La solidarisation (56) se fait avantageusement par soudage, cette opération permettant en outre de fermer la fente 121 et de renforcer la solidarisation des tubes. D'autres techniques, telles que le collage, peuvent être cependant utilisées.

Le procédé selon l'invention peut être réalisé selon différents modes sans sortir du cadre de l'invention : mode continu/mode discontinu, mode manuel/mode automatisé.

Dans le cas où le support d'enroulement comprend plus de deux tubes, on comprend que les étapes 52 à 55 sont réitérées (57) autant de fois que nécessaire.

## Revendications

1. Store à enrouleur comportant un écran souple (13) ayant un bord libre relié à une barre de tirage et un bord opposé solidarisé à un support d'enroulement (1), la surface dudit écran souple (13) étant telle que la barre de tirage prend une position non parallèle audit support d'enroulement (1) en position déployée,
**caractérisé en ce que** ledit support d'enroulement (1) comprend au moins deux supports coaxiaux de diamètres différents, montés de façon que ledit support d'enroulement (1) présente une forme tronconique à degrés, lesdits au moins deux supports coaxiaux de diamètres différents comportant deux tubes voisins (11,12) emmanchés l'un sur l'autre, le premier (11) desdits tubes voisins présentant un diamètre extérieur très légèrement supérieur au diamètre intérieur du second (12) desdits tubes voisins, de telle sorte que lesdits deux tubes voisins (11,12) sont solidaires en rotation une fois assemblés.

2. Store selon la revendication 1, **caractérisé en ce que** ledit deuxième tube (12) présente une fente longitudinale (121) dont les bords peuvent être écartés lors de l'emmanchement sur ledit premier tube (11).

3. Store selon la revendication 2, **caractérisé en ce que** ledit écran souple (13) est solidarisé audit deuxième tube (12) en des points de fixation s'étendant sur ladite fente (121) et/ou au voisinage de ladite fente (121).

4. Store selon la revendication 3, **caractérisé en ce que** la solidarisation dudit écran souple (13) a également une fonction de fermeture de ladite fente (121).

5. Store selon l'une quelconque des revendications 1 à 4, **caractérisé en ce que** ledit deuxième tube (12) présente des stries longitudinales (122) sur sa paroi interne.

6. Store selon l'une quelconque des revendications 1 à 5, **caractérisé en ce que** le tube de plus faible diamètre extérieur s'étend sensiblement sur toute la longueur dudit moyen d'enroulement (1).

7. Store selon l'une quelconque des revendications 1 à 6, **caractérisé en ce que** ledit moyen d'enroulement (1) comprend uniquement deux tubes coaxiaux (11,12).

8. Procédé de fabrication et de montage d'un store à enrouleur comportant un écran souple (13) selon l'une quelconque des revendications 1 à 6, **caractérisé en ce qu**'il comprend les étapes suivantes :
(i) réaliser un premier (11) et un deuxième (12) tubes, le diamètre intérieur dudit deuxième tube (12) étant légèrement inférieur au diamètre extérieur dudit premier tube (11) ;
(v) réaliser une fente (121) sur la longueur dudit deuxième tube (12) ;
(vi) emmancher ledit premier tube (11) dans ledit deuxième tube (12), les bords de ladite fente (121) étant écartés lors de la mise en place ;
(vii) solidariser ledit écran souple (13) sur ledit deuxième tube (12), et sur ledit premier tube (11).

9. Procédé selon la revendication 8, **caractérisé en ce qu**'il comprend une étape supplémentaire consistant à solidariser ledit écran souple (13) sur ladite fente (121) et/ou au voisinage de ladite fente (121) dudit deuxième tube (12), de façon à, simultanément, fermer ladite fente (121).

10. Procédé selon la revendication 9, **caractérisé en ce que** ledit deuxième tube (12) est maintenu dans une position angulaire contrôlée par rapport audit écran souple (13) pendant et après la réalisation de ladite fente (121), ainsi qu'après l'emmanchement dudit premier tube (11), pour pouvoir présenter l'extrémité dudit écran souple (13) en regard de ladite fente (121).

11. Procédé selon l'une quelconque des revendications 8 à 10, **caractérisé en ce qu**'au moins ledit deuxième tube (12) est obtenu par extrusion.

## Claims

1. Roller blind comprising a flexible screen (13) having a free edge which is connected to a draw-bar and an opposite edge which is fastened to a rolling-up support (1), the area of the said flexible screen (13) being such that the draw-bar assumes a position which is not parallel to the said rolling-up support (1) in the deployed position,
**characterised in that** the said rolling-up support (1) comprises at least two coaxial supports with different diameters, which are mounted so that the said rolling-up support (1) has a progressively tapered shape, the said at least two coaxial supports with different diameters comprising two adjoining tubes (11, 12) which are fitted together, one over the other, the first (11) of the said adjoining tubes having an outside diameter which is very slightly larger than the inside diameter of the second (12) of the said adjoining tubes, in such a way that the said two adjoining tubes (11, 12) are integral in rotation once they are joined together.

2. Blind according to Claim 1, **characterised in that** the said second tube (12) has a longitudinal slit (121), the edges of which can be moved apart when said tube is fitted over the said first tube (11).

3. Blind according to Claim 2, **characterised in that** the said flexible screen (13) is fastened to the said second tube (12) at points of attachment extending over the said slit (121) and/or in the vicinity of the said slit (121).

4. Blind according to Claim 3, **characterised in that** the fastening of the said flexible screen (13) also has the function of closing the said slit (121).

5. Blind according to one of Claims 1 to 4, **characterised in that** the said second tube (12) has longitudinal grooves (122) over its internal wall.

6. Blind according to one of Claims 1 to 5, **characterised in that** the tube with the smaller outside diameter extends substantially over the entire length of the said rolling-up means (1).

7. Blind according to one of Claims 1 to 6, **characterised in that** the said rolling-up means (1) comprises solely two coaxial tubes (11, 12).

8. Method of manufacturing and mounting a roller blind comprising a flexible screen (13) according to any of Claims 1 to 6, **characterised in that** said method comprises the following stages:
(i) producing a first tube (11) and a second tube (12), the inside diameter of the said second tube (12) being slightly smaller than the outside diameter of the said first tube (11);
(v) producing a slit (121) over the length of the said second tube (12);
(vi) fitting the said first tube (11) into the said second tube (12), the edges of the said slit (121) being moved apart when installation occurs;
(vii) fastening the said flexible screen (13) onto the said second tube (12), and onto the said first tube (11).

9. Method according to Claim 8, **characterised in that** it comprises an additional stage consisting in fastening the said flexible screen (13) onto the said slit (121) and/or in the vicinity of the said slit (121) in the said second tube (12), so as to simultaneously close the said slit (121).

10. Method according to Claim 9, **characterised in that** the said second tube (12) is kept in a controlled angular position in relation to the said flexible screen (13) during and after the production of the said slit (121), and also after the fitting-in of the said first tube (11), in order to be able to position the end of the said flexible screen (13) opposite the said slit (121).

11. Method according to any of Claims 8 to 10, **characterised in that** at least the said second tube (12) is obtained by extrusion.

## Patentansprüche

1. Rollo mit einer biegsamen Leinwand (13), die einen mit einer Zugstange verbundenen freien Rand und einen entgegengesetzten, mit einer Aufrollunterlage (1) verbundenen Rand aufweist, wobei die Fläche dieser biegsamen Leinwand (13) derart ausgebildet ist, dass die Zugstange in der entfalteten Lage eine nicht parallel zur Position der Aufrollunterlage (1) liegende Position einnimmt,
**dadurch gekennzeichnet, dass** die Aufrollunterlage (1) mindestens zwei koaxialen Stützen verschiedener Durchmesser aufweist, die so montiert sind, dass die Aufrollunterlage (1) eine kegelstumpfartige Form mit Stufen aufweist, wobei diese mindestens zwei koaxialen Stützen mit verschiedenen Durchmessern zwei benachbarte, ineinander gesteckte Rohre (11, 12) aufweisen, wobei das erste (11) dieser zwei benachbarten Rohre einen nur geringfügig größeren Außendurchmesser als der Innendurchmesser des zweiten (12) der benachbarten Rohre aufweist, so dass diese benachbarten Rohre (11, 12) sich nach dem Zusammenstecken gemeinsam drehen können.

2. Rollo nach Anspruch 1, **dadurch gekennzeichnet, dass** das zweite Rohr (12) einen Längsschlitz (121) aufweist, dessen Ränder beim Aufschieben auf das erste Rohr (11) auseinander gedrückt werden.

3. Rollo nach Anspruch 2, **dadurch gekennzeichnet, dass** die biegsame Leinwand (13) mit dem zweiten Rohr (12) an Befestigungspunkten verbunden ist, die sich über dem Schlitz (121) und/oder in der Nähe dieses Schlitzes (121) erstrecken.

4. Rollo nach Anspruch 3, **dadurch gekennzeichnet, dass** die Verbindung der biegsamen Leinwand (13) ebenfalls die Funktion aufweist, den Schlitz (121) zu verschließen.

5. Rollo nach einem der Ansprüche 1 bis 4, **dadurch gekennzeichnet, dass** das zweite Rohr (12) Längsrillen (122) auf der Innenwand aufweist.

6. Rollo nach einem der Ansprüche 1 bis 5, **dadurch gekennzeichnet, dass** das Rohr mit dem geringeren Außendurchmesser sich in etwa über die gesamte Länge des Aufrollmittels (1) erstreckt.

7. Rollo nach einem der Ansprüche 1 bis 6, **dadurch gekennzeichnet, dass** das Aufrollmittel (1) nur zwei koaxiale Rohre (11, 12) aufweist.

8. Herstellungs- und Montageverfahren für ein Rollo mit einer biegsamen Leinwand (13) nach einem der Ansprüche 1 bis 6, **dadurch gekennzeichnet, dass** es die folgenden Stufe aufweist:
(i) Erstellen eines ersten Rohres (11) und eines zweiten Rohres (12), wobei der Innendurchmesser des zweiten Rohres (12) leicht kleiner als der Außendurchmesser des ersten Rohres (11) ist;
(v) Anbringen eines Schlitzes (121) über die Länge des zweiten Rohres (12);
(vi) Einstecken des ersten Rohres (11) in das zweite Rohr (12), wobei die Ränder des Schlitzes (121) beim Einstecken auseinander gedrückt werden;
(vii) Verbinden der biegsamen Leinwand (13) mit dem zweiten Rohr (12) und mit dem ersten Rohr (11).

9. Verfahren nach Anspruch 8, **dadurch gekennzeichnet, dass** es eine zusätzliche Stufe aufweist, der darin besteht, die biegsame Leinwand (13) am Schlitz (121) oder in der Nähe des Schlitzes (121) des zweiten Rohres (12) zu befestigen, so dass der Schlitz (121) gleichzeitig verschlossen wird.

10. Verfahren nach Anspruch 9, **dadurch gekennzeichnet, dass** das zweite Rohr (12) während und nach der Realisierung des Schlitzes (121) sowie nach dem Einstecken des ersten Rohres (11) in einer im Verhältnis zur biegsamen Leinwand (13) kontrollierten Winkelstellung gehalten wird, um es zu ermöglichen, den Rand der biegsamen Leinwand (13) dem Schlitz (121) gegenüber zu stellen.

11. Verfahren nach einem der Ansprüche 8 bis 10, **dadurch gekennzeichnet, dass** mindestens das zweite Rohr (12) durch Strangpressen hergestellt ist.
